# EUROPÄISCHE PATENTSCHRIFT

(11) **EP 3 205 534 B1**
(45) Veröffentlichungstag und Bekanntmachung des Hinweises auf die Patenterteilung: **27.03.2019**
(21) Anmeldenummer: 16155462.1
(22) Anmeldetag: 12.02.2016
(51) Int. Cl.: B60N 2/60

(54) **VEREINFACHTE FAHRZEUGSITZ-SCHUTZFOLIE UND VERFAHREN ZUR HERSTELLUNG DERSELBEN**
SIMPLIFIED VEHICLE SEAT PROTECTION FILM AND METHOD FOR PRODUCING THE SAME
FEUILLE DE PROTECTION DE SIEGE DE VEHICULE SIMPLIFIEE ET SON PROCEDE DE FABRICATION

(43) Veröffentlichungstag der Anmeldung: 16.08.2017
(73) Patentinhaber: Horn & Bauer GmbH & Co. KG, 34613 Schwalmstadt (DE)
(72) Erfinder: Mohr, Thomas, 35279 Neustadt-Momberg (DE)
(74) Vertreter: REHBERG HÜPPE + PARTNER

(56) Entgegenhaltungen:
- EP-A1- 2 189 331
- EP-A2- 0 230 225
- DE-A1- 19 618 814

## Beschreibung

### TECHNISCHES GEBIET DER ERFINDUNG

Fahrzeugsitz-Schutzfolien dienen der Vermeidung einer Verschmutzung eines Fahrzeugsitzes, bspw. durch Monteure, andere Personen oder Verschmutzungen der Umgebung. Bspw. finden Fahrzeugsitz-Schutzfolien Einsatz zur Vermeidung einer Verschmutzung des Fahrzeugsitzes beim Hersteller des Fahrzeugsitzes sowie bei der Zulieferung des Fahrzeugsitzes zum Automobilwerk. Auch während der Montage des Fahrzeugs kommt eine Vielzahl von Monteuren nacheinander mit den Fahrzeugsitzen in Berührung, so dass auch während der Montage der Fahrzeugsitz mit einer Fahrzeugsitz-Schutzfolie geschützt werden muss. Schließlich muss das fertig montierte Fahrzeug vom Band gefahren, auf Lastkraftwagen oder Eisenbahnwaggons aufgefahren und letztendlich beim Fahrzeughändler noch mehrmals gehandhabt werden, bis das Fahrzeug in möglichst sauberem Zustand in die Hand des Erwerbers ausgeliefert werden kann. Von der Erstellung des Fahrzeugsitzes beim Zulieferer bis zur Auslieferung des Fahrzeugs an den Erwerber kommt der Fahrzeugsitz unter Umständen 30 bis 35 Mal in Kontakt mit Monteuren oder anderen Personen, so dass eine erhebliche Verschmutzungsgefahr besteht, welche mittels einer Fahrzeugsitz-Schutzfolie vermieden werden soll. Fahrzeugsitz-Schutzfolien werden bspw. auch verwendet in Automobilwerkstätten, wenn an Fahrzeugen eine Inspektion oder Reparatur durchgeführt wird.

### STAND DER TECHNIK

Fahrzeugsitz-Schutzbezüge sind bspw. aus den Druckschriften DE 199 23 889 C2**,** EP 2 314 476 B1**,** DE 36 01 390 C1**,** EP 2 008 866 B1 und EP 2 913 224 A1 bekannt. Diese Fahrzeugsitz-Schutzbezüge sind zweilagig ausgebildet mit einer Vorderlage und einer Rücklage. Die Rücklage weist ein oberes Taschenteil und ein unteres Taschenteil auf, welche nicht oder über seitliche Verbindungsstreifen der Rücklage miteinander verbunden sein können. Das obere Taschenteil und das untere Taschenteil der Rücklage bilden mit der Vorderlage eine obere Tasche und eine untere Tasche aus, die in einem Querschnitt randgeschlossen ausgebildet sind. Um den Fahrzeugsitz-Schutzbezug an dem Fahrzeugsitz zu fixieren, kann der Fahrzeugsitz-Schutzbezug mit der oberen Tasche auf den oberen Endbereich der Rückenlehne aufgeschoben werden und mit der unteren Tasche auf den vorderen Endbereich des Sitzpolsters aufgeschoben werden, wobei ggf. eine ergänzende Fixierung des Fahrzeugsitz-Schutzbezugs über die seitlichen Streifen der Rücklage an dem Fahrzeugsitz erfolgt. Die Dimensionen des Fahrzeugsitz-Schutzbezugs und insbesondere der oberen Tasche sind derart bemessen, dass in der oberen Tasche (zusätzlich zu dem oberen Endbereich der Rückenlehne des Fahrzeugsitzes) auch eine Kopfstütze des Fahrzeugsitzes aufgenommen werden kann.

Bekannt sind des Weiteren Fahrzeugsitz-Schutzfolien, die lediglich über eine obere Tasche verfügen, ohne dass eine untere Tasche vorhanden ist. Unterhalb der oberen Tasche kann eine derartige Fahrzeugsitz-Schutzfolie lose auf die von dem Fahrzeugsitz und dem Sitzpolster ausgebildete Sitzfläche aufgelegt werden, wobei die Fahrzeugsitz-Schutzfolie dann derart dimensioniert ist, dass diese auch seitlich des Sitzpolsters und vor diesem den Fahrzeugsitz schützen kann.

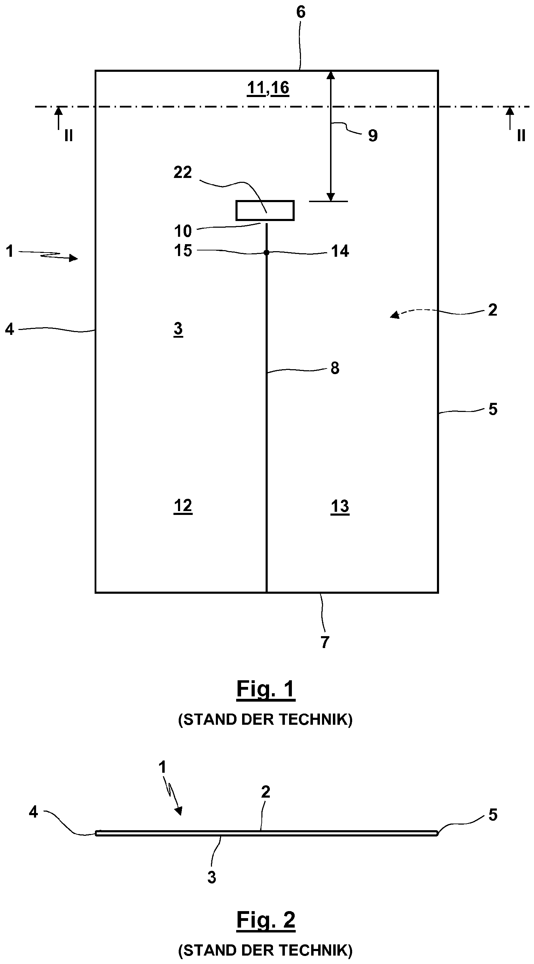

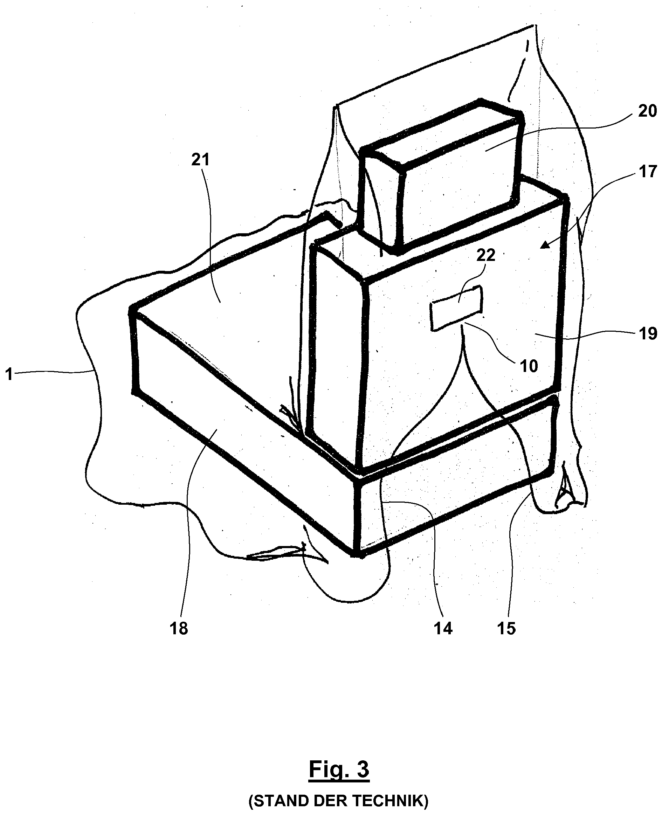

**Fig. 1 bis 3** zeigen eine Fahrzeugsitz-Schutzfolie 1 gemäß dem Stand der Technik. Die Fahrzeugsitz-Schutzfolie 1 weist im abgeflachten Zustand eine Vorderlage 2 und eine Rücklage 3 auf. Die Vorderlage 2 ist mit der Rücklage 3 im Bereich der seitlichen Ränder 4, 5 sowie im Bereich des oberen Rands 6 verbunden, während diese im Bereich des unteren Rands 7 nicht miteinander verbunden sind. Die Rücklage 3 verfügt über einen von dem unteren Rand 7 ausgehenden, nicht durchgehenden und in Richtung der Längsachse parallel zu den Rändern 4, 5 orientierten Einschnitt 8, der in einem Abstand 9 von dem oberen Rand 6 in einem Einschnittende 10 endet. Somit weist die Fahrzeugsitz-Schutzfolie 1 gemäß dem Stand der Technik einen oberen Endbereich 11 auf, in welchem die Fahrzeugsitz-Schutzfolie 1 gemäß Fig. 2 schlauchartig und in Umfangsrichtung randgeschlossen ausgebildet ist. Hingegen bildet die Fahrzeugsitz-Schutzfolie 1 abseits des oberen Endbereichs 11 einen geschlitzten Schlauch, der in Umfangsrichtung infolge des Einschnitts 8 nicht geschlossen, also randoffen ist. Auf beiden Seiten des Einschnitts 8 bildet die Rücklage 3 streifenförmige Rücklagenteile 12, 13 aus, deren einander zugewandte Ränder 14, 15 voneinander weg bewegt werden können, so dass hier der Schlauch geöffnet werden kann und (mit hinreichendem Abstand von dem Einschnittende 10) die Rücklagenteil 12, 13 auseinandergezogen oder entfaltet werden können, womit dann die Vorderlage 2 gemeinsam mit den umgeklappten Teilbereichen der Rücklagenteile 12, 13 eine Flachfolie bilden kann. Der obere Endbereich 11 bildet hingegen eine geschlossene obere Tasche 16 aus. Fig. 3 zeigt stark schematisiert die Nutzung der Fahrzeugsitz-Schutzfolie 1 für einen Fahrzeugsitz 17. Der Fahrzeugsitz 17 weist ein Sitzpolster 18, eine Rückenlehne 19 und eine Kopfstütze 20 auf. Die Oberseite bzw. Vorderseite des Sitzposters 18 und der Rückenlehne 19 bilden gemeinsam eine Sitzfläche 21 aus. Zu erkennen ist, dass die Fahrzeugsitz-Schutzfolie 1 mit der oberen Tasche 16 auf den oberen Endbereich der Rückenlehne 19 aufgezogen ist, womit sich auch die Kopfstütze 20 in der oberen Tasche 16 befindet. Abseits des oberen Endbereichs 11 sind die Ränder 14, 15 im Bereich des Einschnitts 8 (stark vereinfacht erläutert) V-förmig geöffnet und der sich dann unter dem Einschnittende 10 ergebende Teilbereich der Fahrzeugsitz-Schutzfolie ist ähnlich einer Flachfolie auf die Sitzfläche 21 aufgelegt, wobei überschüssige Folienbereiche auch an den seitlichen Begrenzungen des Sitzpolsters 18 von diesem herunterhängen. Hierbei ist das Einschnittende 10 im Bereich der Rückenlehne 19 und unterhalb des oberen Endbereichs der Rückenlehne 19 angeordnet. Um zu vermeiden, dass bei dem Aufziehen der Fahrzeugsitz-Schutzfolie 1 auf die Rückenlehne und bei einem Auseinanderspreizen der Ränder 14, 15 ein Einreißen der Fahrzeugsitz-Schutzfolie 1 erfolgt, ist diese im Bereich des Einschnittendes 10 mit einem einen Rissfortschritt behindernden Verstärkungselement 22 verstärkt.

Fahrzeugsitz-Schutzfolien 1 wie zuvor erläutert gemäß dem Stand der Technik sind insbesondere den Internet-Adressen
- http://www.slipngrip.com/SlipNGrip_Seat_Covers/FG-P9943-SC.html
- http://www.gammaplast.com/public/download/scheda_1_coprisedili_001.pdf
zu entnehmen.

DE 196 18 814 A1 offenbart ein Verfahren zur Herstellung eines Fahrzeugsitz-Schutzbezuges. Der Fahrzeugsitz-Schutzbezug bildet eine obere Tasche sowie eine untere Tasche aus. Die obere Tasche ist dazu bestimmt, um den Fahrzeugsitz-Schutzbezug von oben über eine Rückenlehne des Fahrzeugsitzes zu ziehen, während die untere Tasche dazu bestimmt ist, von vorne über ein Sitzpolster des Fahrzeugsitzes gezogen zu werden. Die Fertigung des Fahrzeugsitz-Schutzbezuges erfolgt hier unter Verwendung eines Folienschlauches, der nach Einbringung eines durchgehenden Einschnittes in die Rücklage so gespreizt wird, dass sich zwischen der oberen Tasche und der unteren Tasche im Bereich der Rücklage ein Schlitz ergibt. Der obere Rand der oberen Tasche sowie der untere Rand der unteren Tasche sind von Faltungen des Schlauches gebildet, während die Taschen seitlich durch Schweißnähte geschlossen sind. In dem über eine Rolle bereitgestellten Folienschlauch werden mehrere über Perforationen aneinanderhängende Fahrzeugsitz-Schutzbezüge bei Ausrichtung quer zur Längserstreckung des Folienschlauches gefertigt.

Gemäß EP 0 230 225 A2 kann ein Fahrzeugsitz-Schutzbezug mit einer oberen Tasche und einer unteren Tasche oder lediglich einer oberen Tasche gefertigt werden, wobei die randgeschlossene obere Tasche über eine Rückenlehne gezogen werden soll.

EP 2 189 331 A1 offenbart einen Fahrzeugsitz-Schutzbezug aus einem Folienschlauch, bei dem die Vorderlage und die Rücklage im Bereich des oberen Randes miteinander verschweißt sind, während der Folienschlauch im Bereich des unteren Randes offen ist. Über einen mittigen Teilbereich der Rücklage erstreckt sich ein Längsschlitz. Oberhalb des Längsschlitzes ist eine nach oben über die Schweißnaht geschlossene, im Querschnitt randgeschlossene obere Tasche gebildet, während unterhalb des Längsschlitzes eine untere Tasche gebildet ist, welche im Querschnitt randgeschlossen ist und nach unten offen ist.

### AUFGABE DER ERFINDUNG

Der vorliegenden Aufgabe liegt die Erfindung zugrunde, eine Fahrzeugsitz-Schutzfolie und ein Verfahren zur Herstellung derselben vorzuschlagen, welche oder welches insbesondere hinsichtlich
- des Materialaufwands,
- der erforderlichen Arbeitsschritte für die Herstellung,
- der multifunktionalen Einsetzbarkeit,
- der Recyclingfähigkeit und Sortenreinheit,
- der Einsetzbarkeit für Fahrzeugsitze unterschiedlicher Abmessungen,
- des Aufwands für einen Transport und/oder eine Lagerhaltung,
- des Aufwands für die Applikation der Fahrzeugsitz-Schutzfolie an dem Fahrzeugsitz und deren Beseitigung,
- der Nutzungseigenschaften,
- der Reißfestigkeit und/oder
- der Herstellungskosten
verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß ist die Fahrzeugsitz-Schutzfolie aus einer Kunststofffolie hergestellt, welche, zumindest für das Endprodukt, in grober Näherung als "schlauchartig" bezeichnet werden kann. Die Dicke der Kunststofffolie kann bspw. weniger als 80 µm (insbesondere weniger als 50 µm, weniger als 30 µm oder sogar weniger als 15 µm) betragen.

Die erfindungsgemäße Fahrzeugsitz-Schutzfolie weist ein Kopfstützenteil und ein Sitzflächenteil aus. Der Kopfstützenteil deckt bei auf einen Fahrzeugsitz aufgebrachter Fahrzeugsitz-Schutzfolie eine Kopfstütze ab. Der Kopfstützenteil weist dabei einen oberen Rand auf, der teilweise oder vollständig geschlossen ist. Hingegen deckt der Sitzflächenteil eine von einem Sitzpolster und einer Rückenlehne auf der dem Benutzer zugewandten Seite gebildete Sitzfläche ab, wenn die Fahrzeugsitz-Schutzfolie auf einen Fahrzeugsitz aufgebracht ist. Der Sitzflächenteil weist dabei einen offenen unteren Rand auf. Vorzugsweise besteht die Fahrzeugsitz-Schutzfolie aus ausschließlich und einstückig dem Kopfstützenteil und dem dann unmittelbar hieran anschließenden Sitzflächenteil.

Während gemäß dem eingangs genannten Stand der Technik der Sitzflächenteil in dem oberen Endbereich, in welchem dieser über den oberen Endbereich der Rückenlehne gezogen ist, im Querschnitt in Umfangsrichtung geschlossen ausgebildet ist, um die Rückenlehne zumindest in dem oberen Endbereich der Rückenlehne einzuschließen oder sogar mit diesem verspannt werden zu können, schlägt die Erfindung vor, dass der Querschnitt der Fahrzeugsitz-Schutzfolie über die gesamte Längserstreckung des Sitzflächenteils in Umfangsrichtung nicht geschlossen (also randoffen) ausgebildet ist. Insbesondere in dem oberen Endbereich des Sitzflächenteils, in welchem dieses auf den oberen Endbereich der Rückenlehne aufgebracht ist, ist somit der Querschnitt der Fahrzeugsitz-Schutzfolie randoffen ausgebildet. Dies hat zur Folge, dass erfindungsgemäß der Sitzflächenteil der Fahrzeugsitz-Schutzfolie nicht auf die Rückenlehne "aufgezogen" werden muss, sondern vielmehr in Umfangsrichtung offen ausgebildet ist, womit auch ein Entfalten des Sitzflächenteils möglich ist und ein Auflegen oder Aufbringen des Sitzflächenteils auf den Fahrzeugsitz ermöglicht wird.

Dies ist unabhängig von der lateralen Erstreckung der Rückenlehne und des Fahrzeugsitzes möglich. Während gemäß dem Stand der Technik die Fahrzeugsitz-Schutzfolie in abgeflachtem Zustand zumindest eine laterale Erstreckung besitzen musste, welche der Breite des Fahrzeugsitzes, insbesondere des oberen Endbereichs der Rückenlehne, entsprochen hat, können durch die randoffene Ausbildung des Querschnitts des Sitzflächenteils auch kleinere laterale Erstreckungen der Fahrzeugsitz-Schutzfolie in abgeflachtem Zustand verwendet werden. Auch für derartige kleinere laterale Erstreckungen kann dann mit dem Aufbringen der Fahrzeugsitz-Schutzfolie auf den Fahrzeugsitz das Sitzflächenteil entfaltet werden, so dass trotz der verringerten lateralen Erstreckung eine vergrößerte laterale Breite des Fahrzeugsitzes abgedeckt werden kann.

Möglich ist hierbei, dass die Rücklagenteile in dem abgeflachten Zustand keine Überlappung miteinander aufweisen und lediglich einen durch den Schnitt herbeigeführten Spalt bilden. Möglich ist aber auch, dass vor dem Herstellen einer der Schweißnaht zur Erzeugung einer Überlappung oder zur Erzeugung eines Zwischenraums zwischen den Rücklagenteilen die Rücklagenteile übereinander geschoben werden oder voneinander weg gezogen werden.

Möglich ist durchaus, dass die lateral inneren Ränder der Rückenlagenteile im Bereich des Kopfstützenteils vor dem oberen Rand der Fahrzeugsitz-Schutzfolie enden, beispielsweise weniger als 30 cm oder auch weniger als 25 cm, 20 cm, 15 cm, 10 cm oder sogar 5 cm vor dem oberen Rand und einer dort angeordneten Schweißnaht enden, womit dann oberhalb des Endes der lateral inneren Ränder noch eine im Querschnitt randgeschlossene Tasche gebildet ist, solange dann bei der bestimmungsgemäßen Verwendung die Fahrzeugsitz-Schutzfolie am oberen Ende der Rückenlehne bereits einen randoffenen Querschnitt aufweist. Für einen weiteren Vorschlag der Erfindung ist der Querschnitt des von der Fahrzeugsitz-Schutzfolie gebildeten Schlauchs über die gesamte Längserstreckung zwischen dem oberen Rand und dem unteren Rand der Fahrzeugsitz-Schutzfolie nicht in Umfangsrichtung geschlossen. Dies bedeutet, dass abweichend zu dem eingangs genannten Stand der Technik kein oberer Endbereich 11 vorhanden ist, im Bereich dessen eine in Umfangsrichtung geschlossene obere Tasche 16 vorhanden ist. Damit rückt die erfindungsgemäße Fahrzeugsitz-Schutzfolie von dem Vorurteil des Fachmanns ab, dass für die Fixierung der Fahrzeugsitz-Schutzfolie an dem Fahrzeugsitz, auch bei einem "Herumrutschen" des Benutzers auf dem mit der Fahrzeugsitz-Schutzfolie geschützten Sitz bspw. beim Ein- und Aussteigen zwingend erforderlich ist, dass die Fahrzeugsitz-Schutzfolie mit einer randgeschlossenen Tasche an dem Fahrzeugsitz montiert werden muss. Vielmehr hat die Erfindung erstmalig erkannt, dass eine hinreichende Fixierung der Fahrzeugsitz-Schutzfolie an dem Fahrzeugsitz auch möglich ist, wenn sich die Öffnung der Rücklage über die gesamte Länge zwischen dem oberen und dem unteren Rand erstreckt, so dass sich eine randoffene obere Tasche ergibt. In diesem Fall können in Längsrichtung der genannten Öffnung orientierte lateral innere Ränder von Rücklagenteilen auseinandergespreizt werden, womit mit zunehmender Entfernung von dem oberen Rand die Überlappung der Vorderlage mit den Rücklagenteilen kleiner wird (oder anders gesagt lateral äußere Teilbereich der Rücklagenteile zu Bestandteilen der Vorderlage flächig ausgerichtet werden). Somit führt die erläuterte Spreizung dazu, dass im oberen Endbereich der Fahrzeugsitz-Schutzfolie eine randoffene Tasche ausgebildet wird, deren Innenquerschnitt sich mit zunehmendem Abstand von dem oberen Rand vergrößert. Die erfindungsgemäß gebildete randoffene Tasche ist somit bei der erläuterten Spreizung der Rücklagenteile in Richtung des oberen Rands verjüngend ausgebildet. Diese verjüngte Ausbildung der randoffenen Tasche kann aber vorteilhaft genutzt werden, um eine Nutzung der Fahrzeugsitz-Schutzfolie für Fahrzeugsitze und insbesondere Kopfstützen und/oder obere Endbereiche der Rückenlehne mit unterschiedlichen Querschnitten zu ermöglichen, wobei für kleinere Querschnitte der Rückenlehne und/oder Kopfstütze dann die Kopfstütze und/oder die Rückenlehne weiter in die verjüngte randoffene Tasche eintreten kann als dies für größere Querschnitte der Fall ist. Ebenfalls möglich ist, dass mit der sich verjüngenden randoffenen oberen Tasche eine Art Einführzentrierung bereitgestellt wird, welche das Aufstülpen der Fahrzeugsitz-Schutzfolie auf den Fahrzeugsitz oder die Kopfstütze vereinfacht. Schließlich erfordert die randgeschlossene Ausbildung der oberen Tasche einer Fahrzeugsitz-Schutzfolie gemäß dem Stand der Technik ein sehr sorgfältiges, passgenaues Aufschieben der oberen Tasche auf den oberen Endbereich der Rückenlehne, welches große Sorgfalt erfordert und zeitaufwendig ist. Hingegen stellt die randoffene Ausbildung der oberen Tasche geringere Anforderungen an das Aufstülpen derselben auf die Kopfstütze und/oder den oberen Endbereich der Rückenlehne.

Für eine weitere Ausgestaltung der Fahrzeugsitz-Schutzfolie werden das Kopfstützenteil und das Sitzflächenteil von einer Vorderlage und zwei Rücklagenteilen, die im Bereich ihrer lateral äußeren Ränder mit der Vorderlage verbunden sind, gebildet. Lateral innere Ränder der Rücklagenteile können derart geöffnet werden, dass das Kopfstützenteil auf eine Kopfstütze des Fahrzeugsitzes aufbringbar ist, während das Sitzflächenteil auf eine Sitzfläche des Fahrzeugsitzes aufgebracht werden kann, was vorzugsweise durch einfaches "Auflegen" erfolgt. Im Bereich der Seitenflächen der Rückenlehne und des Sitzpolsters sowie vor dem Sitzpolster kann sich auch überschüssiges Material der Fahrzeugsitz-Schutzfolie erstrecken, womit dann auch die Seitenflächen und die Vorderseite des Fahrzeugsitzes geschützt werden können. Erfindungsgemäß sind die oberen Ränder der Rücklagenteile mit der Vorderlage über mindestens eine Schweißnaht verbunden. Die lateral inneren Ränder der Rücklagenteile, welche für das Öffnen der Rücklage auseinander bewegt werden, erstrecken sich für diese Ausgestaltung bis zu der Schweißnaht. Dieser Ausgestaltung liegt die Erkenntnis zugrunde, dass für den Stand der Technik mit dem nicht über die gesamte Rücklage 3 durchgehenden Einschnitt 8 bei dem Auseinanderspreizen der Ränder 14, 15 die Gefahr eines Rissfortschritts von dem Einschnittende 10 groß ist, weshalb gemäß dem Stand der Technik die Nutzung eines Verstärkungselements 22 erforderlich sein kann, um den Rissfortschritt zu behindern. Die Applikation des Verstärkungselements 22 stellt einen zusätzlichen Materialaufwand dar und erfordert einen zusätzlichen Herstellungsschritt. Darüber hinaus ist gemäß dem Stand der Technik das Verstärkungselement 22 bspw. aus einem aufzuklebenden PP-Material oder aufzuklebendem Papier hergestellt, womit das Recycling der Fahrzeugsitz-Schutzfolie 1 erschwert wird, da diese unter Umständen nicht mehr sortenrein ist. Dieser Erkenntnis trägt die Erfindung dadurch Rechnung, dass die Endbereiche der lateral innenliegenden Ränder der Rücklagenteile nicht in einem "normalen" Materialbereich der Kunststofffolie enden, sondern vielmehr im Bereich der Schweißnaht. Hiermit wird erfindungsgemäß genutzt, dass im Bereich der Schweißnaht infolge der Wärmebehandlung einer Heißverschweißung oder auch durch eine Kaltverschweißung unter Umständen eine Verfestigung des Materials erfolgt, welche eine erhöhte Reißfestigkeit bereitstellt. Erfolgt die Erzeugung der Schweißnaht mit einem zusätzlichen Schweißmaterial, kann sogar zusätzliches Material im Bereich der Schweißnaht zur Erhöhung der Reißfestigkeit genutzt werden.

Grundsätzlich möglich ist, dass die lateral innenliegenden Ränder der Rückenlagenteile unmittelbar benachbart zueinander angeordnet sind. Dies würde einer Ausführungsform gemäß dem eingangs erläuterten Stand der Technik entsprechen, bei welcher aber abweichend der Einschnitt 8 bis zum oberen Rand 6 und zur Schweißnaht durchgehend ausgebildet ist. Für eine andere erfindungsgemäße Option sind zumindest in einem Teilbereich der Längserstreckung der Schweißnaht mittels der Schweißnaht drei Lagen miteinander verschweißt. Hierbei wird eine verschweißte Lage von der Vorderlage bereitgestellt, während die beiden anderen verschweißten Lagen von sich überlappenden Teilbereichen der Rücklagenteile gebildet sind.

Diese Ausgestaltung ist bspw. dann von Vorteil, wenn in nicht auseinandergespreiztem Zustand die Fahrzeugsitz-Schutzfolie eine geringe Quererstreckung aufweisen soll, während mit der Entfaltung der Rückenlagenteile im Bereich der Sitzfläche dennoch eine verhältnismäßig große Breite der Fahrzeugsitz-Schutzfolie gewährleistet werden soll. Andererseits kann mittels der Überlappung der Rückenlagenteile erreicht werden, dass auch bei der Auseinanderspreizung der lateral inneren Ränder der Rücklagenteile unmittelbar benachbart des oberen Randes weiterhin eine Überlappung gewährleistet ist, infolge welcher trotz der randoffenen Ausgestaltung der oberen Tasche die Kopfstütze und/oder der obere Endbereich der Rückenlehne vollständig in Umfangsrichtung von der Fahrzeugsitz-Schutzfolie umschlossen wird.

Ebenfalls möglich ist allerdings, dass die lateral inneren Ränder der Rücklagenteile im Bereich der mindestens einen Schweißnaht beabstandet voneinander angeordnet sind, womit mit verhältnismäßig geringem Randumfang der randoffenen oberen Tasche, also geringem Materialaufwand, eine verhältnismäßig große Breite der randoffenen oberen Tasche bereitgestellt werden kann.

Möglich ist durchaus, dass die Fahrzeugsitz-Schutzfolie aus einer mehrstückigen Kunststofffolie hergestellt ist, wobei dann einzelne Kunststofffolienteile gezielt an die angestrebten Funktionen, insbesondere die Gleiteigenschaften gegenüber dem Fahrzeugsitz und/oder gegenüber der auf dem Fahrzeugsitz und der Fahrzeugsitz-Schutzfolie sitzenden Person, die Reißfestigkeit, die Farbgebung, eine Luftdurchlässigkeit, die Elastizität u. ä. angepasst sein können. Hierbei sind vorzugsweise die einzelnen Kunststofffolienteile der einstückigen Kunststofffolie stoffschlüssig miteinander verbunden, also verschweißt oder verklebt.

Durchaus möglich ist, dass die Kunststofffolie mit einer einzigen Schicht ausgebildet ist. Vorzugsweise findet aber eine Mehrschichtfolie (wie eine Zweischichtfolie, Dreischichtfolie, ...) Einsatz. Hierbei können die einzelnen Schichten gezielt an angestrebte Funktionen angepasst sein. So kann bspw. eine dem Fahrzeugsitz zugewandte Schicht aus einem Material bestehen, welches eine gute Anhaftung der Fahrzeugsitz-Schutzfolie an dem Fahrzeugsitz gewährleistet. Hingegen kann für dieses Beispiel eine der Person zugewandten Schicht aus einem Material bestehen, welches besonders hautfreundlich ist und/oder ein leichteres Gleiten auf der Fahrzeugsitz-Schutzfolie ermöglicht. Ist mindestens eine mittlere Schicht vorhanden, kann dieser bspw. gezielt aus einem Material hergestellt sein, welches eine große Festigkeit, insbesondere Reißfestigkeit, zur Verfügung stellt.

In weiterer Ausgestaltung der Erfindung ist die Fahrzeugsitz-Schutzfolie auf der der Sitzfläche und der Kopfstütze zugewandten Seite mit einer größeren Anhaftung ausgestattet als auf der anderen Seite. So kann bspw. gezielt die Reibung auf diese Seite erhöht werden, was durch Auswahl des Kontaktmaterials, eine zusätzliche Beschichtung, eine geeignete Wahl der Oberflächenrauigkeit oder eine so genannte Corona-Behandlung, wie diese in der Druckschrift DE 101 32 242 A1 beschrieben ist, erfolgen kann. Ebenfalls möglich ist, dass die Anhaftung durch eine gezielte Aufladung der Fahrzeugsitz-Schutzfolie erhöht ist. Hierbei können die genannten Maßnahmen die gesamte Kontaktfläche der Fahrzeugsitz-Schutzfolie mit dem Fahrzeugsitz oder mindestens einen Teilbereich derselben betreffen.

Grundsätzlich möglich ist, dass die laterale Erstreckung der Vorderlage ca. 80 cm beträgt, wie dies für den eingangs angeführten Stand der Technik der Fall ist. Für den Stand der Technik ist dies zwingend erforderlich, um ein Aufschieben der randgeschlossenen oberen Tasche der Fahrzeugsitz-Schutzfolie auf den oberen Endbereich der Rückenlehne zu ermöglichen. Erfindungsgemäß kann diese Anforderung an die Dimensionierung der Fahrzeugsitz-Schutzfolie aufgehoben werden. Gemäß einer erfindungsgemäßen Ausgestaltung kann somit die Fahrzeugsitz-Schutzfolie mit einer lateralen Erstreckung der Vorderlage ausgebildet sein, die kleiner ist als die Breite der Rückenlehne des Fahrzeugsitzes in deren oberen Endbereich. Beispielsweise beträgt die laterale Erstreckung der Vorderlage weniger als 50 cm oder sogar weniger als 40 cm. Besitzt die Vorderlage (und damit die Fahrzeugsitz-Schutzfolie in dem bevorrateten und zu transportierenden Zustand) eine laterale Erstreckung von weniger als 50 cm oder sogar weniger als 40 cm, ist ein Transport sowie eine Bevorratung von Verpackungen oder Rollen mit Fahrzeugsitz-Schutzfolien besonders kompakt möglich, was insbesondere gilt für den Transport und/oder die Bevorratung auf Euro-Paletten, welche genormte Abmaße von 100 cm x 80 cm besitzen.

Möglich ist auch, dass die laterale Erstreckung der Vorderlage kleiner ist als die Hälfte des Umfangs der Kopfstütze. Ebenfalls möglich ist, dass die Summe der lateralen Erstreckung der Vorderlage und der Rücklagenteile kleiner ist als 100 cm (insbesondere kleiner als 95 cm, 90 cm oder sogar 80 cm).

Eine weitere Lösung der der Erfindung zugrunde liegenden Aufgabe ist gegeben durch ein Verfahren zur Herstellung einer Fahrzeugsitz-Schutzfolie der zuvor erläuterten Art. Bei einem derartigen Verfahren wird ein (im Querschnitt randgeschlossener) Schlauch einer Kunststofffolie hergestellt. Hieran anschließend wird eine rückseitige Lage des Schlauchs durch einen Schnitt in die beiden Rücklagenteile aufgeteilt, während die vorderseitige Lage nicht durchschnitten wird und die Vorderlage bildet. Hieran anschließend wird dann der Bereich des oberen Randes mit der Vorderlage und den Rücklagenteilen verschweißt.

Für ein alternatives Herstellungsverfahren wird zunächst eine Kunststofffolie in Ausgestaltung als Flachfolie hergestellt. Um lediglich ein nicht beschränkendes Beispiel zu nennen, können mehrere, in mehreren parallelen Bahnen verarbeitete Flachfolien auch durch randseitige oder mittige Längseinschnitte eines Schlauchs einer Kunststofffolie hergestellt werden. Seitliche Ränder der Kunststofffolie, welche die Rückenlagenteile bilden sollen, werden dann in einem folgenden Verfahrensschritt umgefaltet, wobei nach dem Umfalten die lateral inneren, einander zugewandten Ränder der Rücklagenteile unmittelbar aneinander angrenzen können, einen Zwischenraum ausbilden können oder eine Überlappung ausbilden können. Hieran anschließend wird dann die Verschweißung der Vorderlage und der Rücklagenteile herbeigeführt.

Im Rahmen der Erfindung kann durchaus eine Einzelfertigung der Fahrzeugsitz-Schutzfolien erfolgen. Vorzugsweise erfolgt die Herstellung der Fahrzeugsitz-Schutzfolien aber in einem kontinuierlichen Herstellungsprozess. Hierzu wird mindestens eine Bahn für mehrere hintereinander angeordnete Fahrzeugsitz-Schutzfolien unter Einsatz der zuvor erläuterten Verfahrensschritte erzeugt. Benachbart der Verschweißung wird dann ein in Querrichtung verlaufender Trennschnitt oder eine Querperforation erzeugt, wobei der Trennschnitt oder die Querperforation dann die unterschiedlichen Fahrzeugsitz-Schutzfolien dieser Bahn voneinander trennen.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Draufsicht auf eine Fahrzeugsitz-Schutzfolie gemäß dem Stand der Technik.
- **Fig. 2**: zeigt einen Schnitt II-II durch die Fahrzeugsitz-Schutzfolie gemäß dem Stand der Technik gemäß Fig. 1.
- **Fig. 3**: zeigt stark schematisiert in einer räumlichen Darstellung von hinten eine auf einen Fahrzeugsitz aufgebrachte Fahrzeugsitz-Schutzfolie entsprechend Fig. 1 und 2 gemäß dem Stand der Technik.
- **Fig. 4 bis 11**: zeigen jeweils eine Draufsicht sowie einen zugeordneten Querschnitt einer erfindungsgemäßen Fahrzeugsitz-Schutzfolie.
- **Fig. 12**: zeigt ein Verfahren zur kontinuierlichen Herstellung von Fahrzeugsitz-Schutzfolien.

### FIGURENBESCHREIBUNG

Im Rahmen der Beschreibung der Erfindung bezeichnet eine Längsachse 23 eine Verbindungsachse des kopfstützenseitigen Endes der Fahrzeugsitz-Schutzfolie 1 mit dem Ende der Fahrzeugsitz-Schutzfolie 1, welche im Bereich des vorderen Endbereichs des Sitzpolsters 18 angeordnet ist. Bei Benutzung der Fahrzeugsitz-Schutzfolie 1 erstreckt sich die Längsachse 23 der Fahrzeugsitz-Schutzfolie 1 somit im Bereich des Sitzpolsters 18 ungefähr entlang der Längsachse des Fahrzeugs, während die Längsachse 23 im Bereich der Rückenlehne 19 entsprechend der Neigung der Rückenlehne 19 gegenüber der vertikalen Richtung geneigt ist. Ohne dass dies zwingend der Fall ist, entspricht die Längsachse 23 der Förderrichtung der Fahrzeugsitz-Schutzfolie 1 während der unterschiedlichen Herstellungsschritte und/oder es erfolgt ein Aufwickeln einer Bahn 25 mit mehreren Fahrzeugsitz-Schutzfolien 1 entlang der Längsachse 23 und/oder mehrere Fahrzeugsitz-Schutzfolien 1 sind in Richtung der Längsachse 23 in einer Bahn 25 hintereinanderliegend angeordnet. Hingegen bezeichnet eine laterale Richtung 24 eine Richtung quer zu der Längsachse 23. Bei Aufbringung der Fahrzeugsitz-Schutzfolie 1 auf einen Fahrzeugsitz 17 ist die laterale Richtung 24 in Fahrzeugquerrichtung orientiert. Hinsichtlich der Benutzung der Fahrzeugsitz-Schutzfolie 1 bezeichnet "vorne" eine Orientierung in Fahrtrichtung des Fahrzeugs oder eine dem Benutzer zugewandte Seite, während "hinten" eine entgegen der Fahrtrichtung orientierte Seite oder eine dem auf dem Fahrzeugsitz 17 sitzenden Benutzer abgewandte Seite. Mit "oben" wird auf den Teil der Fahrzeugsitz-Schutzfolie 1 Bezug genommen, welcher für das Abdecken der Kopfstütze 20 und/oder den oberen Endbereich der Rückenlehne 19 bestimmt ist, während "unten" auf den Teil der Fahrzeugsitz-Schutzfolie 1 Bezug nimmt, welcher für das Abdecken des vorderen Endbereichs des Sitzpolsters 18 bestimmt ist.

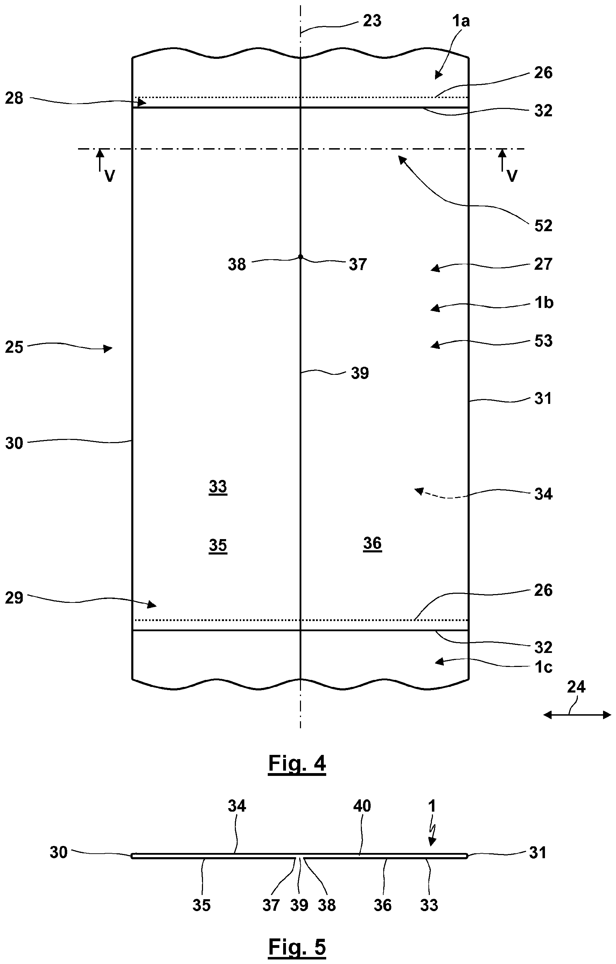

In **Fig. 4** ist eine Bahn 25 dargestellt. in welcher über Querperforationen 26, welche mit gepunkteten Linien gekennzeichnet sind, in Richtung der Längsachse 23 mehrere Fahrzeugsitz-Schutzfolien 1a, 1b, 1c, ... hintereinanderliegend miteinander verbunden sind. Fig. 4 zeigt die Fahrzeugsitz-Schutzfolien 1 von einer Rückseite. Die Fahrzeugsitz-Schutzfolien 1 sind von einem Schlauch 27 gebildet, welcher hier in abgeplattetem Zustand dargestellt ist. Die Fahrzeugsitz-Schutzfolien 1 weisen in diesem Zustand eine rechteckige Außengeometrie auf, welche im Bereich eines oberen Rands 28 sowie eines unteren Rands 29 jeweils von einer Querperforation 26 begrenzt ist sowie von lateral äußeren Rändern 30, 31. Die Ränder 28-31 sind in diesem Zustand geradlinig ausgebildet. Im Bereich des oberen Rands 28 verfügen die Fahrzeugsitz-Schutzfolien 1 unmittelbar benachbart der Perforation 26 (bspw. in einem Abstand von 0,5 cm bis 2 cm) über eine Schweißnaht 32. Die Schweißnaht 32 erstreckt sich für das dargestellte Ausführungsbeispiel über die gesamte Breite der Fahrzeugsitz-Schutzfolie 1, ohne dass dies zwingend der Fall ist. Die Schweißnaht 32 verbindet eine in Fig. 4 sichtbare Rücklage 33 mit einer in Fig. 4 verdeckten Vorderlage 34. Die Rücklage 33 besteht aus zwei Rücklagenteilen 35, 36. Die Rücklagenteile 35, 36 sind rechteckförmig ausgebildet, wobei deren Länge der Längserstreckung der Fahrzeugsitz-Schutzfolien 1 entspricht und deren Breite für das Ausführungsbeispiel gemäß Fig. 4 der halben Breite der Vorderlage 34 entspricht. Im Bereich der äußeren Ränder 30, 31 gehen die Rücklagenteile 35, 36 angesichts der schlauchartigen Ausbildung über in die Vorderlage 34. Hingegen sind die Rücklagenteile 35, 36 durch lateral innere Ränder 37, 38 begrenzt, welche für das Ausführungsbeispiel gemäß **Fig. 4 und 5** eng benachbart unter Ausbildung eines Spalts 39 angeordnet sind. Die lateral inneren Ränder 37, 38 und damit die Rücklagenteile 35, 36 erstrecken sich von dem unteren Rand 29, ausgehend zumindest von der Perforation 26, geradlinig parallel zur Längsachse 23 bis in die Schweißnaht 32. Für das dargestellte Ausführungsbeispiel setzen sich die Ränder 37, 38 und der Spalt 39 auch in dem Zwischenraum zwischen der Querperforation 26 und der Schweißnaht 32 fort, so dass diese über die Bahn 25 durchgehend ausgebildet sind.

Wie in dem Querschnitt gemäß Fig. 5 zu erkennen ist, bildet die Fahrzeugsitz-Schutzfolie zwischen dem oberen Rand 28 und dem unteren Rand 29 eine randoffene Tasche 40, deren Querschnitt sich zwischen der Schweißnaht 32 und dem unteren Rand 29, hier der Querperforation 26, in dem dargestellten abgeplatteten Zustand ohne Auseinanderziehen der Ränder 37, 38 nicht ändert.

Für eine bestimmungsgemäße Verwendung wird eine Fahrzeugsitz-Schutzfolie 1 aus der Bahn 25 durch Abreißen der Querperforation 26 entnommen. Die Ränder 37, 38 können dann auseinanderbewegt werden, wobei sich infolge der Integration der Ränder 37, 38 in die Schweißnaht 32 im Bereich des oberen Rands 28 weiterhin eine Tasche 40 ergibt mit dem Querschnitt gemäß Fig. 5, während sich die laterale Erstreckung der Tasche 40 mit zunehmender Entfernung von der Schweißnaht 32 vergrößert. Hierbei können die Ränder 37, 38 die Form eines umgekehrten, von der Schweißnaht 32 ausgehenden V einnehmen. Mit zunehmendem Abstand von der Schweißnaht 32 vergrößert sich (solange hier noch eine randoffene Tasche gebildet ist) der Abstand der Ränder 37, 38 und damit die laterale Erstreckung des Spalts 39. Bei hinreichender Länge der Fahrzeugsitz-Schutzfolie 1 können die Ränder 37, 38 mit hinreichendem Abstand von der Schweißnaht 32 soweit nach außen geklappt sein, dass diese in einer Ebene mit der Vorderlage 34 angeordnet sind, womit dann in diesem Längsabschnitt der Fahrzeugsitz-Schutzfolie 1 im Gebrauchszustand keine Tasche mehr gebildet ist. Vielmehr kann dann dieser Längsabschnitt der Fahrzeugsitz-Schutzfolie 1 als eine Art Flachfolie verwendet werden, welche von oben auf die Sitzfläche 21 aufgelegt werden kann.

In Abwandlung gegenüber dem in Fig. 4 und 5 dargestellten Ausführungsbeispiel kann zwischen der Querperforation 26 und der benachbarten Schweißnaht 32 die Rücklage 33 ohne Spalt 39 ausgebildet sein, so dass die Ränder 37, 38 unmittelbar aneinander anstoßen.

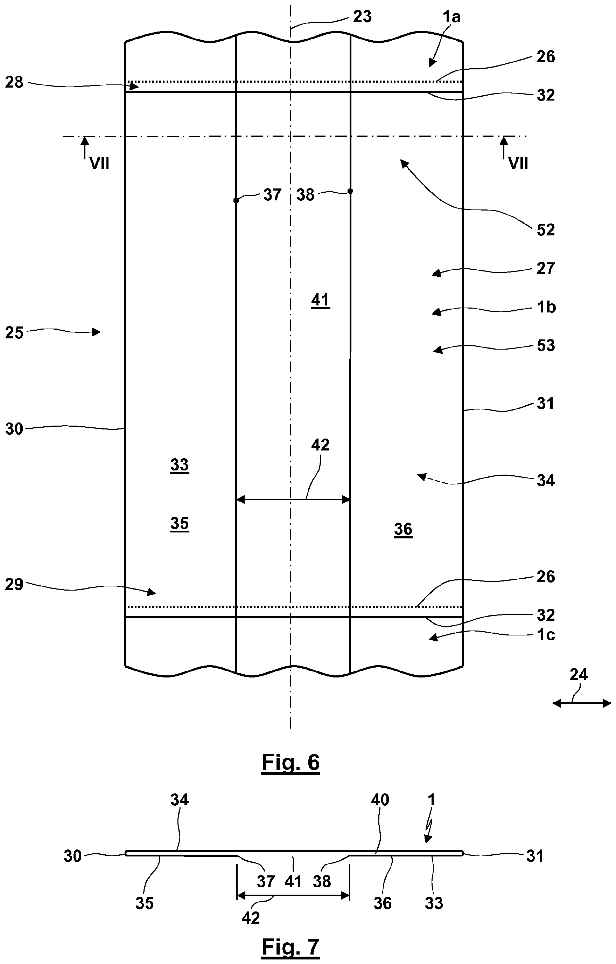

Bei ansonsten dem Ausführungsbeispiel gemäß Fig. 4 und 5 entsprechender Ausgestaltung grenzen für das Ausführungsbeispiel gemäß **Fig. 6 und 7** die Ränder 37, 38 nicht unmittelbar unter Ausbildung eines geringen Spalts 39 aneinander an. Vielmehr sind diese unter Ausbildung eines Zwischenraums 41 mit einem Abstand 42 voneinander angeordnet. Dies hat zur Folge, dass die randoffene Tasche 40 eine größere Öffnung ausbildet. Die Umfangslänge des Schlauchs 27 (und damit die laterale Erstreckung der Fahrzeugsitz-Schutzfolie 1 bei vollständiger Entfaltung als Flachfolie) beträgt in diesem Fall das Doppelte der lateralen Erstreckung der Vorderlage 34 vermindert um den Abstand 42. Auch für dieses Ausführungsbeispiel verbleibt mit dem Entfalten der Rücklagenteile 35, 36 eine sich in Richtung der Schweißnaht 32 verjüngende randoffene Tasche, deren Öffnung sich von der Schweißnaht 32 weg in lateraler Richtung vergrößert. Der Längsbereich der Fahrzeugsitz-Schutzfolie 1, in welchem die Ausbildung einer Flachfolie möglich ist, ohne dass hier noch eine Tasche ausgebildet wird, verfügt aber für diese Ausgestaltung unter Umständen über eine gegenüber dem Ausführungsbeispiel gemäß Fig. 4 und 5 größere Längserstreckung. Andererseits kann unter Umständen bei gleicher Abmessung der Vorderlage 34 der Materialeinsatz für die Herstellung der Fahrzeugsitz-Schutzfolie 1 reduziert werden.

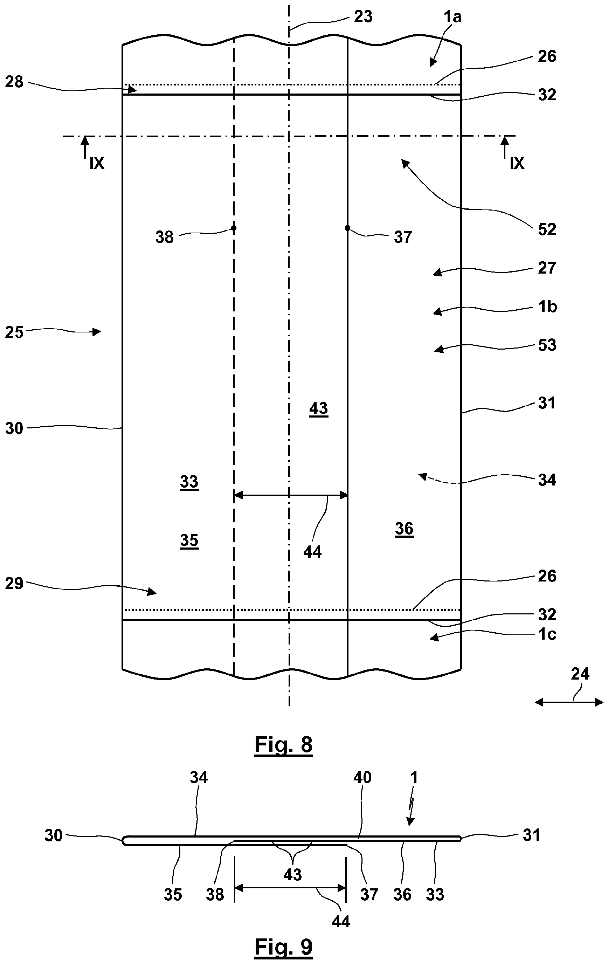

Bei ansonsten entsprechender Ausgestaltung verfügen gemäß **Fig. 8 und 9** die Rücklagenteile 35, 36 über eine Überlappung 43 mit einer Quererstreckung 44. Für diese Ausgestaltung entspricht die Umfangslänge des Querschnitts (und damit die laterale Erstreckung der Fahrzeugsitz-Schutzfolie 1 bei vollständiger Entfaltung) der Summe der doppelten lateralen Erstreckung der Vorderlage 34 und der Quererstreckung 44. In diesem Fall kann der Längsabschnitt der Fahrzeugsitz-Schutzfolie 1, in welchem ein vollständiges Entfalten der Rücklagenteile 35, 36 möglich ist, eine kleinere Längserstreckung aufweisen als für die Ausführungsbeispiele gemäß Fig. 4 bis 7. In Fig. 8 ist der Rand 38 des Rücklagenteils 36, welcher infolge der Überlappung 43 von dem Rücklagenteil 35 abgedeckt ist, gestrichelt dargestellt.

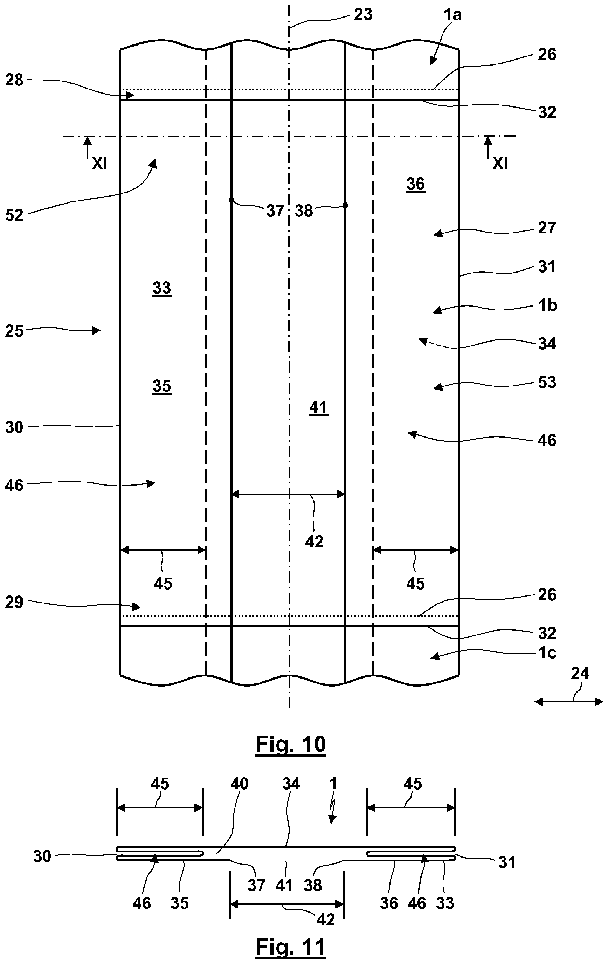

Für die Ausführungsform gemäß **Fig. 10 und 11** sind die Rücklagenteile 35, 36 mehrfach hin- und hergefaltet mit einer Erstreckung 45 von Faltungen 46. Hier weisen die Ränder 37, 38 unter Ausbildung eines Zwischenraums 41 einen Abstand 42 auf. Hierbei sind die Ränder 37, 38 lateral innenliegend von den Faltungen 46 angeordnet. Durchaus möglich ist aber in Abwandlung gegenüber dem Ausführungsbeispiels gemäß Fig. 10 und 11, dass auch hier die Rücklagenteile 35, 36 zusätzlich zu den Faltungen 46 eine Überlappung aufweisen.

Beliebige Abmessungen der Fahrzeugsitz-Schutzfolie 1 sind möglich. Hierbei besitzt diese in der Regel eine größere Längserstreckung als für die dargestellten Ausführungsformen. Für ein Ausführungsbeispiel mit Ausgestaltung der Fahrzeugsitz-Schutzfolie 1 gemäß Fig. 8 und 9 ist die Fahrzeugsitz-Schutzfolie 1 aus einer Kunststofffolie hergestellt, deren Umfangslänge bzw. gesamte laterale Erstreckung in entfaltetem Zustand 900 mm beträgt, während die laterale Erstreckung der Vorderlage 34 350 mm beträgt, womit sich eine laterale Erstreckung der Rücklagenteile 35, 36 von jeweils 275 mm ergibt. Abweichungen der Umfangslänge von ± 20 mm, insbesondere ± 10 mm, bei gleichzeitigen möglichen Abweichungen der lateralen Erstreckung der Rücklagenteile 35, 36 um ± 75 mm, insbesondere ± 50 mm, sind ebenfalls möglich. Für dieses Ausführungsbeispiel beträgt die Erstreckung der Fahrzeugsitz-Schutzfolie 1 in Richtung der Längsachse 23 1.600 mm, wobei auch Abweichungen von dieser Längserstreckung um ± 100 mm, insbesondere ± 50 mm, möglich sind. Die Fahrzeugsitz-Schutzfolie 1 ist hierbei vorzugsweise aus einer Kunststofffolie mit einer Dicke im Bereich von 6 µm bis 40 µm, insbesondere 10 µm bis 20 µm, bspw. 12 µm, hergestellt. Möglich ist auch, dass eine gereckte Kunststofffolie verwendet wird, wobei mittels des Reckens bspw. eine Dicke der Kunststofffolie weiter reduziert werden kann, womit der Materialeinsatz reduziert werden kann, und/oder mittels des Reckens eine Beeinflussung der Festigkeit der Kunststofffolie erfolgt.

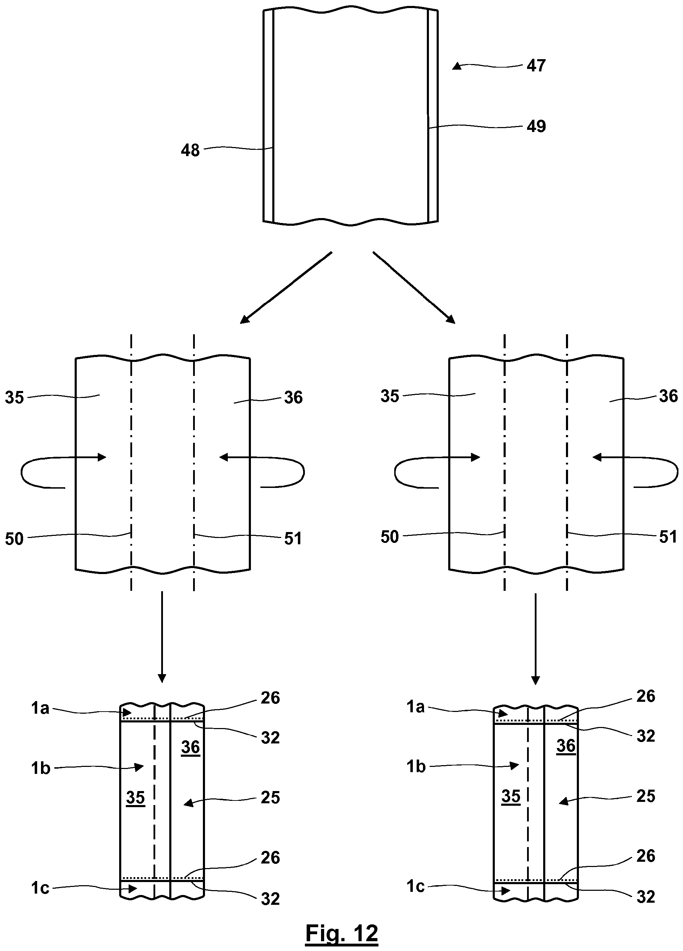

**Fig. 12** zeigt ein Ausführungsbeispiel für die Herstellung einer Bahn 25 mit Fahrzeugsitz-Schutzfolien 1. In einem ersten Schritt wird in einem kontinuierlichen Extrusionsverfahren ein Schlauch 47 einer Kunststofffolie hergestellt. Im Bereich der lateralen Ränder des abgeplatteten Schlauchs 47 werden dann Längseinschnitte 48, 49 erzeugt. Damit verbleiben zwei kontinuierliche Bahnen einer Flachfolie, deren Breite der lateralen Erstreckung der Fahrzeugsitz-Schutzfolie 1 in entfaltetem Zustand entspricht. (Abweichend zu Figur 12 können die Längseinschnitte 48, 49 jeweils mit einem einzigen Schnitt die Kunstofffolie an den seitlichen Rändern durchtrennen.) Die sich ergebenden beiden Bahnen der Kunststofffolie werden wie dargestellt in parallelen Verarbeitungspfaden verarbeitet. In einem hieran anschließenden Schritt werden die späteren Rücklagenteile 35, 36 entlang der Faltlinien 50, 51 gefaltet. Schließlich werden in hieran anschließenden Schritten die Schweißnaht 32 und die Querperforation 26 erzeugt. Während der Herstellung entspricht die Längsachse 23 der Fahrzeugsitz-Schutzfolien 1 der Förderrichtung der Kunststofffolie, wobei die Faltlinien 50, 51 parallel zur Förderrichtung orientiert sind.

Für den Fachmann ist unter Berücksichtigung von Fig. 12 ersichtlich, dass auch weitere Längseinschnitte in einen dann größeren Schlauch 47 eingebracht werden können, woraus dann mehr als zwei parallel zu verarbeitende Bahnen der Kunststofffolie resultieren.

Möglich ist, dass vor, während oder nach den genannten Verfahrensschritten eine Bedruckung der Kunststofffolie erfolgt. Möglich ist hierbei, dass mittels der Bedruckung dem Benutzer der Fahrzeugsitz-Schutzfolie 1 Hinweise für die Benutzung der Fahrzeugsitz-Schutzfolie 1 gegeben werden. Möglich ist auch, dass mittels der Bedruckung kenntlich gemacht wird, bei welcher Seite der Fahrzeugsitz-Schutzfolie 1 es sich um eine anhaftende, rutschhemmende Seite handelt, welche vorzugsweise dem Fahrzeugsitz zugewandt angeordnet werden sollte.

Bei einem Herstellungsverfahren gemäß Fig. 12 (oder auch einem abweichenden Herstellungsverfahren) kann die Bereitstellung der Kunststofffolie als Flachfolie oder Flachfolienbahn erfolgen, was insbesondere vorteilhaft für eine Bedruckung der Kunststofffolie und/oder eine Zwischenlagerung der Kunststofffolie ist.

Im oberen Endbereich bildet die Fahrzeugsitz-Schutzfolie 1 einen Kopfstützenteil 52 aus, welcher auf die Kopfstütze 20 aufgebracht werden kann. Im Bereich des Kopfstützenteils 52 verbleibt auch bei Auseinanderfalten der Rücklagenteile 35, 36 eine Tasche mit randoffenem Querschnitt. Der Kopfstützenteil 52 endet im oberen Endbereich der Rückenlehne 19, wenn die Fahrzeugsitz-Schutzfolie 1 bestimmungsgemäß auf den Fahrzeugsitz 17 aufgebracht ist. Des Weiteren bildet die Fahrzeugsitz-Schutzfolie 1 einen an den Kopfstützenteil anschließenden Sitzflächenteil 53 aus, welcher auf eine Sitzfläche 21 des Fahrzeugsitzes 17 aufgebracht werden kann. Insbesondere verfügt der Sitzflächenteil 53 über einen Längsabschnitt, in welchem eine vollständige Entfaltung der Rücklagenteile 35, 36 unter Ausbildung einer Flachfolie möglich ist.

Für das Ausführungsbeispiel gemäß Fig. 4 und 5 verbindet die Schweißnaht 32 grundsätzlich zwei Lagen, während im Bereich des Spalts 39 die Schweißnaht 32 unterbrochen ist oder lediglich an einer Lage vorhanden ist. Für das Ausführungsbeispiel gemäß Fig. 6 und 7 verbindet die Schweißnaht 32 im Bereich der Rücklagenteile 35, 36 zwei Lagen, während im Bereich des Zwischenraums 41 die Schweißnaht 32 unterbrochen ist oder lediglich an der Vorderlage 34 erzeugt ist. Für das Ausführungsbeispiel gemäß Fig. 8 und 9 sind über die Schweißnaht 32 im Bereich der Überlappung 43 drei Lagen miteinander verschweißt, während seitlich der Überlappung 43 lediglich zwei Lagen über die Schweißnaht 32 verbunden sind. Für das Ausführungsbeispiel gemäß Fig. 10 und 11 erfolgt im Bereich der Faltungen 46 eine Verschweißung von vier Lagen, wobei auch bei zusätzlichen Faltungen eine Verschweißung von mehr Lagen erfolgen kann. Zwischen den Faltungen 46 und den Rändern 37, 38 verbindet hier die Schweißnaht 32 lediglich zwei Lagen. Im Bereich des Zwischenraums 41 ist die Schweißnaht 32 unterbrochen oder lediglich an der Vorderlage 34 erzeugt. Möglich ist auch, dass die Schweißnaht 32 unterbrochen ist, solange die Schweißnaht die Ränder 37, 38 mit der Vorderlage 34 verbindet.

Für die dargestellten Ausführungsbeispiele ist die Fahrzeugsitz-Schutzfolie 1 mit rechteckiger Außengeometrie hergestellt mit geradlinig verlaufenden Rändern 37, 38, geradliniger Querperforation 26 und geradlinig in lateraler Richtung orientierter Schweißnaht 32. Beliebige abweichende Geometrien sind im Rahmen der Erfindung ebenfalls möglich.

Bei Wahl der Breite der Vorderlage 34 ungefähr entsprechend der Breite der Kopfstütze 20 (oder auch 10 mm oder 20 mm breiter als die Breite der Kopfstütze) führt die Benutzung der Fahrzeugsitz-Schutzfolie 1 dazu, dass die Fahrzeugsitz-Schutzfolie 1 eng an der Kopfstütze 20 anliegt, ohne dass eine Sicht nach hinten seitlich der Kopfstütze 20 behindert ist durch überschüssige Materialbereiche der Fahrzeugsitz-Schutzfolie 1, wie dieses für Ausführungsformen gemäß dem Stand der Technik der Fall ist, bei welchen die laterale Erstreckung der Vorderlage 34 der Breite des Fahrzeugsitzes 17 angepasst ist.

Findet eine Kunststofffolie mit mehreren Schichten Einsatz, kann als glattes Material für die dem Benutzer zugewandte Vorderseite bspw. MDPE oder HDPE eingesetzt werden. Möglich ist, dass für die dem Benutzer zugewandte Schicht auch ein LDPE eingesetzt wird, dem ein starkes Gleitmittel und/oder ein Gleitmittel in hoher Konzentration zugesetzt ist. Ist mindestens eine mittlere Schicht vorhanden, kann diese optimiert sein zur Bereitstellung einer hohen Reißfestigkeit. Hierbei findet insbesondere LLDPE, HDPE und/oder MPDE Einsatz. Hingegen wird für eine untere, dem Fahrzeugsitz zugewandte Schicht ein Material zur Herbeiführung einer größeren Anhaftung als für die Schicht, die dem Benutzer zugewandt ist, eingesetzt. Möglich ist, dass hier ein LLDPE ohne Zusatz eines Gleitmittels Einsatz findet. Möglich ist, dass mehrere Schichten gleiche Dicken aufweisen oder unterschiedliche Dicken aufweisen, wobei bspw. eine mittlere Schicht eine größere Dicke aufweisen kann als die äußeren Schichten. Für jede der Schichten ist aber auch der Einsatz beliebiger anderer Materialien, bspw. PP, PA oder EVA, möglich.

Des Weiteren ist möglich, dass unterschiedliche Seiten der Kunststofffolie mittels der Bedruckung oder der Wahl des Materials für eine Schicht optisch unterschiedlich gestaltet werden. So ist bspw. möglich, dass die unterschiedlichen Seiten unterschiedliche Farben aufweisen. Möglich ist alternativ oder kumulativ, dass die unterschiedlichen Seiten mit unterschiedlicher Brillanz (in unterschiedlichem Ausmaß stumpf oder glänzend ausgebildet) aufweisen. Mit der Farben und/oder Brillanz kann bspw. für den Benutzer kenntlich gemacht werden, bei welcher Seite der Fahrzeugsitz-Schutzfolie 1 es sich um die Innenseite und die Außenseite handelt.

Möglich ist, dass die Fahrzeugsitz-Schutzfolie 1 transparent, teilweise transparent oder nicht durchsichtig ausgebildet ist. Dies gilt sowohl für eine farbige als auch nicht farbige Ausgestaltung.

Möglich ist des Weiteren, dass die Fahrzeugsitz-Schutzfolie 1 weiß ausgebildet ist. Dies erzeugt u. U. eine optische Wirkung, welche die Fahrzeugsitz-Schutzfolie 1 dicker erscheinen lässt. Des Weiteren wirkt eine weiße Fahrzeugsitz-Schutzfolie 1 u. U. besonders sauber. Möglicherweise kann die weiße Ausgestaltung der Fahrzeugsitz-Schutzfolie 1 auch genutzt werden, um Verunreinigungen besonders gut sichtbar zu machen.

Sofern ein Aufwickeln der Bahn 25 zu einer Rolle zwecks Bevorratung und/oder Transport der Fahrzeugsitz-Schutzfolien 1 erfolgen soll und die unterschiedliche Zahl von Lagen und hieraus resultierende unterschiedliche Dicken einer Wicklung störend ist, kann vor dem Aufwickeln der Bahnen 25 eine zusätzliche Stützfaltung, bspw. im Randbereich erzeugt werden.

Für die dargestellten Ausführungsbeispiele ist die Fahrzeugsitz-Schutzfolie 1 spiegelsymmetrisch zur skizzierten Längsachse 23 ausgebildet, so dass die Ränder 37, 38 einen gleichen Abstand von der Längsachse 23 besitzen und mit gleichem Abstand von den Rändern 30, 31 in die Schweißnaht 32 einlaufen. Dies ist nicht zwingend der Fall. Durchaus möglich ist vielmehr, dass die Ränder 37, 38 für unterschiedliche Abstände von den zugeordneten Rändern 30, 31 in die Schweißnaht 32 einlaufen. Um lediglich ein nicht beschränkendes Beispiel zu nennen, umfasst die Erfindung auch eine Ausführungsform, bei welcher abweichend zu der Ausführungsform gemäß Fig. 4 und 5 bei an sich entsprechender Ausgestaltung der Spalt 39 im Bereich eines der Ränder 30, 31 angeordnet ist, so dass die schlauchartige Kunststofffolie in dem Querschnitt gemäß Fig. 5 nicht mittig, sondern seitlich geschlitzt ist.

### BEZUGSZEICHENLISTE

- 1: Fahrzeugsitz-Schutzfolie
- 2: Vorderlage
- 3: Rücklage
- 4: seitlicher Rand
- 5: seitlicher Rand
- 6: oberer Rand
- 7: unterer Rand
- 8: Einschnitt
- 9: Abstand
- 10: Einschnittende
- 11: oberen Endbereich
- 12: Rücklagenteil
- 13: Rücklagenteil
- 14: lateral innerer Rand
- 15: lateral innerer Rand
- 16: obere Tasche
- 17: Fahrzeugsitz
- 18: Sitzpolster
- 19: Rückenlehne
- 20: Kopfstütze
- 21: Sitzfläche
- 22: Verstärkungselement
- 23: Längsachse
- 24: laterale Richtung
- 25: Bahn
- 26: Querperforation
- 27: Schlauch
- 28: oberer Rand
- 29: unterer Rand
- 30: lateral äußerer Rand
- 31: lateral äußerer Rand
- 32: Schweißnaht
- 33: Rücklage
- 34: Vorderlage
- 35: Rücklagenteil
- 36: Rücklagenteil
- 37: lateral innerer Rand
- 38: lateral innerer Rand
- 39: Spalt
- 40: randoffene Tasche
- 41: Zwischenraum
- 42: Abstand
- 43: Überlappung
- 44: Quererstreckung
- 45: Erstreckung
- 46: Faltung
- 47: Schlauch
- 48: Längseinschnitt
- 49: Längseinschnitt
- 50: Faltlinie
- 51: Faltlinie
- 52: Kopfstützenteil
- 53: Sitzflächenteil

## Patentansprüche

1. Fahrzeugsitz-Schutzfolie (1) aus einer schlauchartigen Kunststofffolie mit
a) einem Kopfstützenteil (52), welcher bei auf einen Fahrzeugsitz (17) aufgebrachter Fahrzeugsitz-Schutzfolie (1) eine Kopfstütze (20) abdeckt und einen zumindest teilweise geschlossenen oberen Rand aufweist, und
b) einem Sitzflächenteil (53), welcher bei auf einen Fahrzeugsitz (17) aufgebrachter Fahrzeugsitz-Schutzfolie (1) eine Sitzfläche (21) abdeckt und einen offenen unteren Rand (29) aufweist,
**dadurch gekennzeichnet, dass**
c) der Querschnitt der Fahrzeugsitz-Schutzfolie (1) über die gesamte Längserstreckung des Sitzflächenteils (53) in Umfangsrichtung nicht geschlossen ist.

2. Fahrzeugsitz-Schutzfolie (1) nach Anspruch 1, **dadurch gekennzeichnet, dass** der Querschnitt der Fahrzeugsitz-Schutzfolie (1) über die gesamte Längserstreckung zwischen dem offenen unteren Rand (29) und dem oberen Rand (30) in Umfangsrichtung nicht geschlossen ist.

3. Fahrzeugsitz-Schutzfolie (1) nach Anspruch 2, **dadurch gekennzeichnet, dass**
a) das Kopfstützenteil (52) und das Sitzflächenteil (53) mit
aa) einer Vorderlage (34) und
ab) zwei Rücklagenteilen (35, 36), die im Bereich Ihrer lateral äußeren Ränder (30, 31) mit der Vorderlage (34) verbunden sind,
gebildet sind und
b) die lateral innere Ränder (37, 38) der Rücklagenteile (35, 36) derart geöffnet werden können, dass
ba) das Kopfstützenteil (52) auf eine Kopfstütze (20) des Fahrzeugsitzes (17) aufsetzbar ist und
bb) das Sitzflächenteil (53) auf eine Sitzfläche (21) des Fahrzeugsitzes (17) aufgebracht werden kann,
c) die oberen Ränder (28) der Rücklagenteile (35, 36) mit der Vorderlage (34) über mindestens eine Schweißnaht (32) miteinander verbunden sind, wobei sich die lateral inneren Ränder (37, 38) der Rücklagenteile (35, 36) bis zu der Schweißnaht (32) erstrecken.

4. Fahrzeugsitz-Schutzfolie (1) nach Anspruch 3, **dadurch gekennzeichnet, dass** zumindest in einem Teilbereich der Längserstreckung der Schweißnaht (32) mittels der Schweißnaht (32) drei Lagen miteinander verschweißt sind, welche mit der Vorderlage (34) und sich Rücklagenteilen (35, 36) gebildet sind, wobei die Rücklagenteile (35, 36) mit einer Überlappung (43) angeordnet sind.

5. Fahrzeugsitz-Schutzfolie (1) nach Anspruch 3, **dadurch gekennzeichnet, dass** die lateral inneren Ränder (37, 38) der Rücklagenteile (35, 36) im Bereich der mindestens einen Schweißnaht (32) mit einem Abstand (42) voneinander angeordnet sind.

6. Fahrzeugsitz-Schutzfolie (1) nach einem der vorhergehenden Ansprüche, **dadurch gekennzeichnet, dass** die Fahrzeugsitz-Schutzfolie (1) aus einer einstückigen Kunststofffolie besteht.

7. Fahrzeugsitz-Schutzfolie (1) nach einem der vorhergehenden Ansprüche, **dadurch gekennzeichnet, dass** die Kunststofffolie als Mehrschichtfolie ausgebildet ist.

8. Fahrzeugsitz-Schutzfolie (1) nach einem der vorhergehenden Ansprüche, **dadurch gekennzeichnet, dass** die Fahrzeugsitz-Schutzfolie (1) auf der einer Sitzfläche (21) zugewandten Seite mit einer größeren Anhaftung ausgestattet ist als auf der anderen Seite.

9. Fahrzeugsitz-Schutzfolie (1) nach einem der vorhergehenden Ansprüche, **dadurch gekennzeichnet, dass** die laterale Erstreckung der Vorderlage (34) kleiner ist als die laterale Erstreckung einer Rückenlehne (19) eines Fahrzeugsitzes (17).

10. Fahrzeugsitz-Schutzfolie (1) nach einem der vorhergehenden Ansprüche, **dadurch gekennzeichnet, dass** die laterale Erstreckung der Vorderlage (34) ungefähr dem halben Umfang der Kopfstütze (20) in dem oberen Endbereich der Kopfstütze (20) entspricht oder kleiner ist der halbe Umfang der Kopfstütze (20) in dem oberen Endbereich der Kopfstütze (20).

11. Fahrzeugsitz-Schutzfolie (1) nach einem der vorhergehenden Ansprüche, **dadurch gekennzeichnet, dass** die Summe der lateralen Erstreckung der Vorderlage (34) und der Rücklagenteile (35, 36) kleiner ist als 100 cm.

12. Verfahren zur Herstellung einer Fahrzeugsitz-Schutzfolie (1) nach einem der Ansprüche 1 bis 11, **dadurch gekennzeichnet, dass**
a) ein Schlauch (47) einer Kunststofffolie hergestellt wird,
b) eine rückseitige Lage des Schlauchs durch einen durchgehenden Schnitt in die beiden Rücklagenteile (35, 36) aufgeteilt wird, während die vorderseitige Lage des Schlauches (47) die Vorderlage (34) bildet,
c) eine Schweißnaht (32) erzeugt wird, die die Vorderlage (34) mit den Rücklagenteilen (35, 36) verbindet.

13. Verfahren zur Herstellung einer Fahrzeugsitz-Schutzfolie (1) nach einem der Ansprüche 1 bis 11, **dadurch gekennzeichnet, dass**
a) eine Kunststofffolie in Ausgestaltung als Flachfolie hergestellt wird,
b) seitliche Ränder der Kunststofffolie, welche die Rücklagenteile (35, 36) bilden, entlang Faltlinien (50, 51) umgefaltet werden,
c) eine Schweißnaht (32) erzeugt wird, die die Vorderlage (34) mit den Rücklagenteilen (35, 36) verbindet.

14. Verfahren nach Anspruch 12 oder 13, **dadurch gekennzeichnet, dass**
a) die Herstellung der Fahrzeugsitz-Schutzfolie (1) in einem kontinuierlichen Herstellungsprozess erfolgt und
b) benachbart der Schweißnaht (32) ein in Querrichtung verlaufender Trennschnitt oder eine Querperforation (26) erzeugt wird.

## Claims

1. Vehicle seat protection film (1) made of a tube-like plastic film with
a) a headrest part (52) which covers a headrest (20) if the vehicle seat protection film (1) is applied to a vehicle seat (17) and which comprises an at least partially closed upper edge and
b) a seat base part (53) which covers a seat base (21) if the vehicle seat protection film (1) is applied to a vehicle seat (17) and which comprises an open lower edge (29)
**characterized in that**
c) the cross-section of the vehicle seat protection film (1) is not closed in a circumferential direction over the entire longitudinal extension of the seat base part (53).

2. Vehicle seat protection film (1) according to claim 1, **characterized in that** the cross-section of the vehicle seat protection film (1) is not closed in the circumferential direction over the entire longitudinal extension between the open lower edge (29) and the upper edge (30).

3. Vehicle seat protection film (1) according to claim 2, **characterized in that**
a) the headrest part (52) and the seat base part (53) are realised with
aa) a front layer (34) and
ab) two back layer parts (35, 36) connected to the front layer (34) in the region of their lateral outer edges (30, 31),
and
b) the laterally inner edges (37, 38) of the back layer parts (35, 36) can be opened in such a way that
ba) the headrest part (52) can be put onto a headrest (20) of the vehicle seat (17) and
bb) the seat base part (53) can be applied to a seat base (21) of the vehicle seat (17),
c) the upper edges (28) of the back layer parts (35, 36) are connected to the front layer (34) via at least one weld seam (32), where the laterally inner edges (37, 38) of the back layer parts (35, 36) extend up to the weld seam (32).

4. Vehicle seat protection film (1) according to claim 3, **characterized in that** in at least a part region of the longitudinal extension of the weld seam (32) by means of the weld seam (32) three layers formed by the front layer (34) and back layer parts (35, 36) are welded with each other, where the back layer parts (35, 36) are arranged with an overlap (43).

5. Vehicle seat protection film (1) according to claim 3, **characterized in that** in the region of the at least one weld seam (32) the laterally inner edges (37, 38) of the back layer parts (35, 36) are arranged with a distance (42) from one another.

6. Vehicle seat protection film (1) according to one of the preceding claims, **characterized in that** the vehicle seat protection film (1) consists of a one-piece plastic film.

7. Vehicle seat protection film (1) according to one of the preceding claims, **characterized in that** the plastic film is realised as a multi-layer film.

8. Vehicle seat protection film (1) according to one of the preceding claims, **characterized in that** the vehicle seat protection film (1) is equipped with a higher adhesion on the side turned towards a seat base (21) than on the other side.

9. Vehicle seat protection film (1) according to one of the preceding claims, **characterized in that** the lateral extension of the front layer (34) is smaller than the lateral extension of a backrest (19) of a vehicle seat (17).

10. Vehicle seat protection film (1) according to one of the preceding claims, **characterized in that** the lateral extension of the front layer (34) corresponds approximately to half the circumference of the headrest (20) in the upper end portion of the headrest (20) or is smaller than half the circumference of the headrest (20) in the upper end portion of the headrest (20).

11. Vehicle seat protection film (1) according to one of the preceding claims, **characterized in that** the sum of the lateral extension of the front layer (34) and the back layer parts (35, 36) is smaller than 100 cm.

12. Method for producing a vehicle seat protection film (1) according to one of claims 1 to 11, **characterized in that**
a) a tube (47) of a plastic film is produced,
b) a back-oriented layer of the tube is separated into the two back layer parts (35, 36) by a continuous cut while the front-oriented layer of the tube (47) forms the front layer (34),
c) a weld seam (32) is produced which connects the front layer (34) to the back layer parts (35, 36).

13. Method for producing a vehicle seat protection film (1) according to one of the claims 1 to 11, **characterized in that**
a) a plastic film is produced in the form of a flat film,
b) side edges of the plastic film which form the back layer parts (35, 36) are folded along fold lines (50, 51),
c) a weld seam (32) is produced which connects the front layer (34) to the back layer parts (35, 36).

14. Method according to claim 12 or 13, **characterized in that**
a) the vehicle seat protection film (1) is produced in a continuous production process and
b) adjacent to the weld seam (32) a separating cut extending in a transverse direction or a transverse perforation (26) is produced.

## Revendications

1. Film protecteur de siège de véhicule (1) constitué d'un film de matière plastique en forme de gaine, avec
a) une partie d'appuie-tête (52), qui recouvre un appuie-tête (20) lorsque le film protecteur de siège de véhicule (1) est appliqué sur un siège de véhicule (17) et qui comprend un bord supérieur au moins partiellement fermé et
b) une partie d'assise (53), qui recouvre une assise (21) lorsque le film protecteur de siège de véhicule (1) est appliqué sur un siège de véhicule (17) et qui comprend un bord inférieur (29) ouvert,
**caractérisé en ce que**
c) la section transversale du film protecteur de siège de véhicule (1) n'est pas fermée dans la direction circonférentielle sur toute l'extension longitudinale de la partie d'assise (53).

2. Film protecteur de siège de véhicule (1) selon la revendication 1, **caractérisé en ce que** la section transversale du film protecteur de siège de véhicule (1) n'est pas fermée dans la direction circonférentielle sur toute l'extension longitudinale entre le bord inférieur (29) ouvert et le bord supérieur (30).

3. Film protecteur de siège de véhicule (1) selon la revendication 2, **caractérisé en ce que**
a) la partie d'appuie-tête (52) et la partie d'assise (53) sont constituées
aa) d'une couche avant (34) et
ab) de deux parties de couches arrière (35, 36) qui sont reliées avec la couche avant (34) au niveau de leurs bords latéraux externes (30, 31),
et
b) les bords latéraux internes (37, 38) des parties de couches arrière (35, 36) peuvent être ouverts de façon à ce que
ba) la partie d'appuie-tête (52) puisse être posée sur un appuie-tête (20) du siège de véhicule (17) et
bb) la partie d'assise (53) peut être appliquée sur une assise (21) du siège de véhicule (17),
c) les bords supérieurs (28) des parties de couches arrière (35, 36) sont reliées entre eux avec la couche avant (34) par l'intermédiaire d'au moins un cordon de soudure (32), les bords latéraux internes (37, 38) des parties de couches arrière (35, 36) s'étendant jusqu'au cordon de soudure (32).

4. Film protecteur de siège de véhicule (1) selon la revendication 3, **caractérisé en ce que**, au moins sur une partie de l'extension longitudinale du cordon de soudure (32), au moyen du cordon de soudure (32), trois couches sont soudées entre elles, qui sont constituées de la couche avant (34) et des parties de couches arrière (35, 36), les parties de couches arrière (35, 36) étant disposée avec un chevauchement (43).

5. Film protecteur de siège de véhicule (1) selon la revendication 3, **caractérisé en ce que** les bords latéraux internes (37, 38) des parties de couches arrière (35, 36) sont disposées à une distance (42) entre elles au niveau de l'au moins un cordon de soudure (32).

6. Film protecteur de siège de véhicule (1) selon l'une des revendications précédentes, **caractérisé en ce que** le film protecteur de siège de véhicule (1) est constitué d'un film de matière plastique d'une seule pièce.

7. Film protecteur de siège de véhicule (1) selon l'une des revendications précédentes, **caractérisé en ce que** le film de matière plastique est conçu comme un film multi-couche.

8. Film protecteur de siège de véhicule (1) selon l'une des revendications précédentes, **caractérisé en ce que** le film protecteur de siège de véhicule (1) présente, sur le côté orienté vers une assise (21), une adhérence supérieure à l'autre côté.

9. Film protecteur de siège de véhicule (1) selon l'une des revendications précédentes, **caractérisé en ce que** l'extension latérale de la couche avant (34) est inférieure à l'extension latérale d'un dossier (19) d'un siège de véhicule (17).

10. Film protecteur de siège de véhicule (1) selon l'une des revendications précédentes, **caractérisé en ce que** l'extension latérale de la couche avant (34) correspond approximativement à la moitié de la circonférence de l'appuie-tête (20) dans la partie d'extrémité supérieure de l'appuie-tête ou est inférieure à la moitié de la circonférence de l'appuie-tête (20) dans la partie d'extrémité supérieure de l'appuie-tête (20).

11. Film protecteur de siège de véhicule (1) selon l'une des revendications précédentes, **caractérisé en ce que** la somme de l'extension latérale de la couche avant (34) et des parties de couches arrière (35, 36) est inférieure à 100 cm.

12. Procédé de fabrication d'un film protecteur de siège de véhicule (1) selon l'une des revendications 1 à 11, **caractérisé en ce que**
a) une gaine (47) est fabriquée à partir d'un film en matière plastique,
b) une couche arrière de la gaine est divisée en deux parties de couches arrière (35, 36) par une découpe continue, tandis que la couche avant de la gaine (47) constitue la couche avant (34),
c) un cordon de soudure (32) est réalisé, qui relie la couche avant (34) avec les parties de couches arrière (35, 36).

13. Procédé de fabrication d'un film protecteur de siège de véhicule (1) selon l'une des revendications 1 à 11, **caractérisé en ce que**
a) un film de matière plastique est façonné sous la forme d'un film plat,
b) les bords latéraux du film de matière plastique, qui constituent les parties de couches arrière (35, 36), sont repliées le long de lignes de pliage (50, 51),
c) un cordon de soudure (32) est réalisé, qui relie la couche avant (34) avec les parties de couches arrière (35, 36).

14. Procédé selon la revendication 12 ou 13, **caractérisé en ce que**
a) la fabrication du film protecteur de siège de véhicule (1) a lieu à l'aide d'un processus de fabrication en continu et
b) à proximité du cordon de soudure (32), est réalisée une découpe de séparation s'étendant dans la direction transversale ou une perforation transversale (26).
